(19) Europäisches Patentamt
European Patent Office
Office européen des brevets

(11) Publication number: 0 044 049 B2

(12) NEW EUROPEAN PATENT SPECIFICATION

(45) Date of publication of the new patent specification: 10.10.90

(51) Int. Cl.[5]: C 08 F 8/42

(21) Application number: 81105365.1

(22) Date of filing: 09.07.81

# (54) A method of producing a silyl group-containing venyl resin and a paint containing the resin.

(30) Priority: 11.07.80 JP 95481/80

(43) Date of publication of application: 20.01.82 Bulletin 82/03

(45) Publication of the grant of the patent: 02.01.85 Bulletin 85/01

(45) Mention of the opposition decision: 10.10.90 Bulletin 90/41

(84) Designated Contracting States: BE DE FR GB IT

(56) References cited:
FR-A-2 057 376
FR-A-2 154 638
FR-A-2 401 176

The file contains technical information submitted after the application was filed and not included in this specification

(73) Proprietor: KANEGAFUCHI KAGAKU KOGYO KABUSHIKI KAISHA
2-4 Nakanoshima 3-chome
Kita-ku Osaka-shi Osaka-fu (JP)

(72) Inventor: Kato, Yasushi
27-14, 1-chome, Katayama-cho
Nagata-ku Kobe-shi Hyogo-ken (JP)
Inventor: Furukawa, Hisao
Sanseiso, 96-1, Aza-takigahira Shioya-cho
Tarumi-ku Kobe-shi Hyogo-ken (JP)
Inventor: Ando, Naotami
Sanseiso, 96-1, Aza-takigahira Shioya-cho
Tarumi-ku Kobe-shi Hyogo-ken (JP)

(74) Representative: Vossius & Partner
Siebertstrasse 4 P.O. Box 86 07 67
D-8000 München 86 (DE)

**Description**

Vinyl resins containing silyl groups having a hydrolyzable group at their end or in a side chain have many outstanding advantages. The hydrolyzable silyl group improves the adhesion of the resin to inorganic substances. Moreover, it accomplishes cross-linking at room temperature with the aid of water, particularly in the open air, and forms a dense network structure which provides the resin with an outstanding degree of solvent resistance, water resistance, heat resistance, hardness, surface luster and weather resistance.

Such vinyl resins have, however, still proved unsatisfactory in a number of other respects. Although they are highly adhesive to inorganic substances as in the case in which a silane coupling agent is used, they do not show any satisfactory adhesion to organic substances. Moreover, silyl group-containing compounds lack storage stability. Due to the reactivity of the silyl group, silyl group-containing compounds are used for a wide range of applications, including the preparation of paints, coating agents, silane coupling agents and adhesives. Such compounds, however, tend to increase their viscosity and ultimately form a gel as a result of the reaction of the silyl group during its storage.

The authors of this invention have found it possible to improve the physical properties of silyl group-containing vinyl resins outstandingly and to obtain many advantages in the process of its synthesis if maleic anhydride is incorporated into the resin. FR—A—2 401 176, which corresponds to Japanese application no. 36395/79 discloses polymers comprising a vinyl polymer main chain, each molecule bearing at least one silyl group which is bonded to a hydrolysable group. In example 11 of this reference, the main chain is a copolymer of various vinyl monomers of which about 8.9 wt% is maleic anhydride.

It has been found that the use of maleic anhydride contributes to improving the storage stability of the resin outstandingly. Further, maleic anhydride improves the adhesion of the resin to organic substances, as well as to inorganic substances. Thus, the vinyl resin becomes not only useful for application to the surface of inorganic substances in the form of a paint, coating or adhesive, but also for application to the surface of organic substances, such as wood, paper or plastic, or an organic paint as a coating thereon. The improved adhesion of the resin can be further enhanced if a vinyl compound having a polar group is incorporated by copolymerization.

Another aspect of the improvement in the physical properties of the vinyl resin resides in its curability. The incorporation of maleic anhydride has been found to contribute to increasing the curing speed outstandingly even in the absence of any catalyst. This is apparently due to the fact that maleic anhydride functions as a curing catalyst in the copolymer molecule, and assists uniform curing and crosslinking of the resin. The maleic anhydride component of the copolymer can be half esterificated by heating with alcohol and contributes to improving the feature of adhesion and increasing the curing speed.

The use of maleic anhydride provides a great advantage in the process for the synthesis of a silyl group-containing vinyl resin, as opposed to other organic acids, though these latter may also be useful for improving the physical properties of the resin. Maleic anhydride enables stability in the synthesis of such a resin without involving any gelation or viscosity increase. Moreover, maleic anhydride contributes to improving outstandingly the storage stability of the resin, particularly when it is used for preparing a paint or the like, and the dispersion stability of a pigment therein.

According to the process disclosed in FR—A—2 401 176 the silyl group-containing vinyl resin having maleic anhydride residues incorporated within the resin is produced by reaction of a vinyl resin containing maleic anhydride residues with a hydrosilane. This prior art process, however, proved to be unsatisfactory when carried out in practice. The product obtained in this process inevitably contains by-products of the hydrosilation reaction, such as hydrogen or hydrogen chloride gas. These contaminants or unreacted starting products are liable to cause undesirable premature gelation of the resin.

It is therefore the object of the invention to provide a process for the production of silyl group-containing vinyl resins having maleic anhydride residues incorporated in the resin which does not show the above described disadvantages of the prior art process but provides superior products free of contaminating by-products. This object is achieved by the invention.

Thus the invention provides a method of producing a silyl group-containing vinyl resin having a molecular weight of 1000 to 30,000, said method comprising radically polymerizing a silane compound of the general formula

$$\begin{array}{c} (R_1)_{3-n} \\ | \\ (R_3)\text{—Si—}X_n \end{array}$$

in which $(R_1)$ stands for a hydrogen atom or a monovalent hydrocarbon group selected from the group consisting of alkyl, aryl and aralkyl groups having 1 to 10 carbon atoms, $(R_3)$ stands for an organic residue having a polymerizable double bond, X stands for a hydrolyzable group, and n is an integer of 1 to 3, 0.1 to 20% by weight of maleic anhydride, and a vinyl compound at a temperature of 50 to 150°C in the presence of a radical polymerization initiator.

The silyl group-containing vinyl resin of this invention has in each molecule at least one, and preferably

at least two silyl groups bonded to a hydrolyzable group, and contains 0.1 to 20% by weight of maleic anhydride as a copolymer component. The silyl groups are mostly represented by the formula

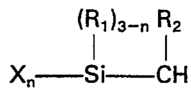

in which X stands for a hydrolyzable group, ($R_1$) and ($R_2$) each stand for a hydrogen atom or an alkyl, aryl or aralkyl group having 1 to 10 carbon atoms, and n is an integer of 1, 2 or 3. The hydrolyzable group may, for example, be a halogen, alkoxy, for example methoxy, acyloxy, ketoximate, amino, acid amide, aminoxy, mercapto or alkenyloxy group.

The incorporation of maleic anhydride by copolymerization contributes to improving the stability of the resin and pot life of the paint in the open air.

The process for producing a vinyl resin containing maleic anhydride residues of this invention is carried out by copolymerization between a vinyl compound maleic anhydride and a silane compound having a polymerizable double bond, as will hereinafter be described in detail.

Examples of the silane compound include the following:

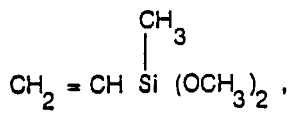 , 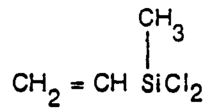

$CH_2 = CH\ Si\ (OCH_3)_3$ , $CH_2 = CH\ SiCl_3$

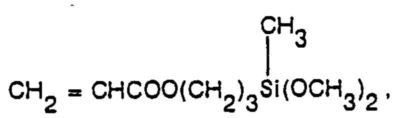 , $CH_2 = CHCOO(CH_2)_3Si(OCH_3)_3$

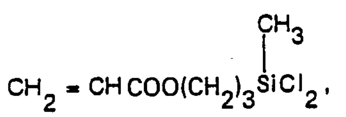 , $CH_2 = CHCOO(CH_2)_3SiCl_3$

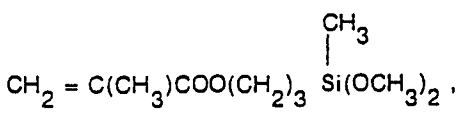 , $CH_2 = C(CH_3)COO(CH_2)_3Si(OCH_3)_3$

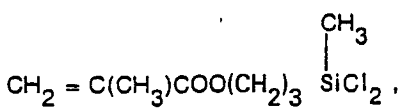 , $CH_2 = C(CH_3)COO(CH_2)_3SiCl_2$

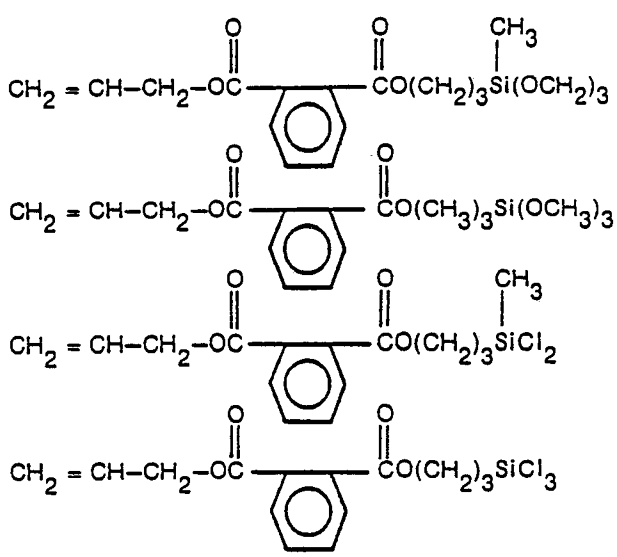

These silane compounds can be synthesized by various methods, for example by reacting acetylene, allyl acrylate, allyl methacrylate or diallyl phthalate with methyldimethoxysilane, methyldichlorosilane, trimethoxysilane or trichlorosilane in the presence of a Group VIII transition metal catalyst.

The quantity of the silane compound to be used may be selected so as to enable each silyl group to have a molecular weight of 300 to 4,000.

The vinyl compound to be copolymerized with the silane compound may be an acrylic or methacrylic ester such as methyl acrylate, methyl methacrylate, butyl acrylate or butyl methacrylate, a monomer containing an acid amide group such as acrylamide, methacrylamide, N-butoxymethylacrylamide, N-butoxymethylmethacrylamide, an epoxy group such as glycidyl acrylate or glycidyl methacrylate or an amino group such as diethylaminoethyl acrylate, diethylaminoethyl methacrylate or aminoethylvinyl ether, or a monomer, such as acrylonitrile, iminol methacrylate, styrene, α-methylstyrene, alkylvinyl ether, vinyl chloride, vinyl acetate, vinyl propionate or ethylene.

In addition, it is also possible to use a vinyl compound having a hydroxy group, for example, 2-hydroxyethyl acrylate, 2-hydroxyethyl methacrylate, 2-hydroxypropyl acrylate, 2-hydroxypropyl methacrylate, 2-hydroxyvinyl ether, N-methylolacrylamide, or Aronix 5700 (product of Toa Gosei Kagaku Kogyo K.K., Japan).

The maleic anhydride to be copolymerized with the vinyl compound and the silane compound is used in an amount of 0.1 to 20% by weight, preferably 0.5 to 10% by weight, of the reactants.

The copolymer between the vinyl and silane compounds may be synthesized by a customary method of solution polymerization. The vinyl and silane compounds and maleic anhydride are reacted with each other at a temperature of 50°C to 150°C in the presence of a radical polymerization initiator. A chain transfer agent, such as n-dodecyl mercaptan or t-dodecyl mercaptan, may be added if required for obtaining a silyl group-containing copolymer having a molecular weight of 1,000 to 30,000. The molecular weight of the copolymer can be also varied if the quantity of the catalyst and the reaction temperature and adjusted appropriately. A solvent may or may not be used, but if any solvent is used, it is desirable to use an unreactive solvent, such as ethers, hydrocarbons or acetic esters.

If the hydrolyzable group in the silyl group-containing vinyl resin obtained is a halogen group it may be converted to another hydrolyzable functional group, such as alkoxy, acyloxy, aminoxy, amino, acid amide, ketoxymate or mercapto, by a method which is, for example, described in Japanese Laid-open Patent Application No. 91546/79.

The silyl group-containing vinyl resin obtained in the process of this invention is curable at room temperature upon exposure to the air, forming chemically a network structure. Its curing speed depends on the temperature and relative humidity of the air to which it is exposed, and the hydrolyzable group which it contains. Therefore, it is particularly important to remember that the type of the hydrolyzable group should be taken into due consideration when the resin is used.

A curing promoter may or may not be used for curing the vinyl resin. If any curing promoter is to be used, it is effective to use a metal salt of a carboxylic acid, such as alkyltitanate, tin octylate or dibutyl tin dilaurate, a metal salt of a sulfide, or mercaptide, such as $(n\text{-}C_4H_9)_2Sn{=}S$, $(n\text{-}C_8H_{17})_2Sn{=}S$, $(n\text{-}C_4H_9)_2Sn(SCH_2COOC_8H_{17}\text{-iso})_2$, $(n\text{-}C_8H_{17})Sn(SCH_2COO(CH_2)_4OCOCH_2S)$, an amine such as dibutylamine-2-hexoate, or any other acid or basic catalyst. The quantity of the curing promoter is preferably in the range of 0.001 to 10% by weight based on the resin.

The silyl group-containing vinyl resin is useful as a paint or a coating material, since it is curable at room temperature or a low temperature. In fact, it is rapidly curable at room temperature to form a coated film having a highly lustrous surface as will hereinafter be shown by examples. The surface hardness or other physical properties of the coated film can be improved if ethyl silicate, or any other compound that is capable of co-condensation with the vinyl resin of this invention is incorporated. The vinyl resin of this invention may be blended appropriately into various kinds of conventionally available resinous paints and coating materials, such as resinous lacquers, acylic lacquers, thermosetting acrylic paints, alkyd resin paints, melamine resin paints or epoxy resin paints, to improve the adhesion, weather resistance and other physical properties thereof.

It is possible to mix the vinyl resin with various kinds of fillers and pigments, such as silica, calcium carbonate, magnesium carbonate, titanium dioxide, iron oxide, glass fibers, inorganic pigments or organic pigments. Therefore, the silyl group-containing vinyl resin is useful as a surface treating agent for various kinds of inorganic substances, and a painting, coating or sealing composition for aircraft, buildings, automobiles, glass, or the like, as well as for the purposes which have already been set forth.

A paint containing the vinyl resin obtained by the process of this invention may be manufactured for example by admixing 100 parts by weight of the silyl group-containing vinyl resin and 1 to 50 parts by weight of an alkyl alcohol. The components are admixed at a temperature from room temperature to 100°C.

The invention will now be described more specifically with reference to the examples thereof.

### Example 1

A solution containing 2 g of azobisisobutyronitrile dissolved in 30 g of styrene, 22 g of $CH_2{=}C(CH_3)COO(CH_2)_3Si(OCH_3)_3$, 22 g of methyl methacrylate, 15 g of n-butyl methacrylate, 18 g of butyl acrylate, 4 g of maleic anhydride and 4 g of n-dodecyl mercaptan was dropped into 100 g of xylene heated to 90°C in a tightly closed reactor, and reacted for 10 hours, whereby a silyl group-containing vinyl polymer

having a molecular weight of 6,000 was obtained. The infrared absorption spectrum of this polymer indicated absorption by the acid anhydride.

Example 2

A solution containing 5 g of azobisisobutyronitrile dissolved in 15 g of styrene, 15 g of $CH_2=C(CH_3)COO(CH_2)_3Si(OCH_3)_3$, 55 g of methylmethacrylate, 20 g of butylacrylate and 1 g of maleic anhydride was dropped into a mixture of 50 g of butylacetate and 50 g xylene heated to 120°C in a tightly closed reactor, and reacted for 10 hours, whereby a silyl group-containing vinyl polymer having a molecular weight of 8,000 was obtained.

The infrared absorption spectrum of this polymer indicated by acid anhydride at 1780 $cm^{-1}$. Then 150 g of methanol was added to the reaction mixture and heated at 50°C for an hour. The infrared absorption spectrum of the polymer reacted with methanol showed no absorption at 1780 $cm^{-1}$.

Comparative Example 1

The procedure of Example 1 was repeated for preparing a silyl group containing vinyl polymer, except that no maleic anhydride was employed.

Comparative Example 2

An attempt was made to obtain a vinyl polymer by using acylic acid instead of maleic anhydride and otherwise repeating the procedures of Example 1, but a strong increase in viscosity compelled the reaction to be discontinued at the end of seven hours.

Titanium dioxide was mixed by a ball mill into each of the polymer solutions obtained in Examples 1 and 2 and Comparative Example 1 in a mixing ratio of 1:1 by solid weight; whereby a white enamel paint was prepared. A catalyst was added into each enamel as shown in Table 1, and this was overcoated on a coated film of a nitrocellulose lacquer surfacer on a mild steel plate, or simply coated on a mild steel plate. The coating was heated at 60°C for 40 minutes, and after one day its solvent resistance and surface hardness were examined. Moreover, a film of each polymer solution, into which the catalyst had been added, was formed by casting, and heat treated at 60°C for 40 minutes. After one day, the film was checked for its acetone-insoluble gel content. The results are shown in Table 1.

Moreover, 5 parts of methanol, 1.5 parts of methyl orthoformate and xylene were added into each white enamel based on the solid weight thereof to form an enamel paint having a solid content of 65% by weight. Each enamel paint was checked for storage stability at 50°C for one month, and its change in viscosity was examined. The results are shown in Table 1.

TABLE 1

| | Base | Catalyst | Spot test for solvent resistance | | Pencil hardness | Gel content (%) | Storage stability at 50°C | | Potlife |
|---|---|---|---|---|---|---|---|---|---|
| | | | Toluene | Lacquer thinner | | | Initial viscosity (cps) | Viscosity after one month | at room temperature in open air (hrs) |
| Example 1 | Mild steel plate | Stann JF–9B | O | O | F | 84 | 150 | 350 | more than 24 |
| ,, ,, | Lacquer surface | ,, | O | O | HB | | | | |
| Example 2 | Lacquer surface | OTL | O | O | H | 87 | | | more than 24 |
| Comparative Example 1 | Mild steel plate | ,, | O | X | B | 75 | 150 | 2,000 | 8 |
| ,, ,, | Laquer surface | ,, | Δ | X | 2B | | | | |

Notes: Spot Test: A single drop of toluene or lacquer thinner was cast on the coated film surface, and the film was examined for any change.

O : The film did not show any change;

Δ : It showed a slight change; and

X : It was swollen, or peeled off the base.

Pencil Hardness: determined in accordance with the requirements specified by JIS (Japanese Industrial Standard) pencil scratch test K5400.

Stann JF—9B: Organo tin salt of mercaptide (manufactured by Sankyo Yuki Gosei, Co., Ltd., Japan)

OTL: Dioctyl tin dilaurate

Quantity of Catalyst Added: 3% by weight based on the solid content of the resin being 100% by weight.

As is obvious from the foregoing table, the incorporation of maleic anhydride by copolymerization was found to contribute to improving the curability of the resin outstandingly as shown by the gel content, hardness, and the results of the spot tests. It will also be noted from the results of the spot tests that the products of this invention showed greatly improved adhesion not only to a mild steel plate, but also to an organic lacquer surface. Maleic anhydride was also found to improve the storage stability of the paint outstandingly.

**Claims**

1. A method of producing a silyl group-containing vinyl resin having a molecular weight of 1000 to 30,000, said method comprising radically polymerizing a silane compound of the general formula

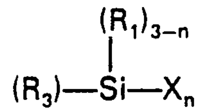

in which ($R_1$) stands for a monovalent hydrocarbon group selected from the group consisting of alkyl, aryl and aralkyl groups having 1 to 10 carbon atoms, ($R_3$) stands for an organic residue having a polymerizable double bond, X stands for a hydrolyzable group, and n is an integer of 1 to 3, with 0.1 to 20% by weight of maleic anhydride, and with at least one vinyl compound at a temperature of 50 to 150°C in the presence of a radical polymerization initiator.

2. A method according to claim 1, wherein said hydrolyzable group is a methoxy group.

3. A paint comprising 100 parts by weight of a silyl group-containing vinyl resin obtained according to claims 1 to 2 and 1 to 50 parts by weight of an alkyl alcohol, wherein said two components are admixed at a temperature from room temperature to 100°C.

**Patentansprüche**

1. Verfahren zur Herstellung eines Silylgruppen enthaltenden Vinylharzes mit einem Molekulargewicht von 1000 bis 30,000, wobei dieses Verfahren die radikalische Polymerisation einer Silanverbindung der allgemeinen Formel

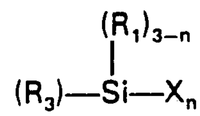

in der ($R_1$) einen einwertigen Kohlenwasserstoffrest aus der Gruppe der Alkyl-, Aryl- oder Aralkyl- reste mit 1 bis 10 Kohlenstoffatomen, $R_3$ einen organischen Rest mit einer polymerisierbaren Doppelbindung und X eine hydrolysierbare Gruppe bedeuten, und n eine ganze Zahl im Wert von 1 bis 3 darstellt, mit 0,1 bis 20 Gewichtsprozent Maleinsäureanhydrid und mit wenigstens einer Vinylverbindung bei einer Temperatur von 50 bis 150°C in Gegenwart eines radikalischen Polymerisationsinitiators umfaßt.

2. Verfahren nach Anspruch 1, dadurch gekennzeichnet, daß die hydrolysierbare Gruppe eine Methoxygruppe ist.

3. Anstrichmittel, umfassend 100 Gewichtsteile eines Silylgruppen enthaltenden, gemäß Ansprüche 1 oder 2 erhaltenen Vinylharzes und 1 bis 50 Gewichtsteile eines Alkylalkohols, wobei die beiden Komponenten bei einer Temperatur von Raumtemperatur bis 100°C vermischt wurden.

**Revendications**

1. Procédé de préparation d'une résine vinylique contenant des groupes silyliques possédant un poids moléculaire de 1000 à 30,000, ledit procédé consistant à polymérisier radicalairement un composé silane de formule générale

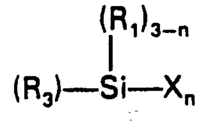

dans laquelle ($R_1$) représente un groupe hydrocarbure monovalent choisi dans le groupe composé de groupes alcoyle, aryle et aralcoyle possédant à 10 atomes de carbone, ($R_3$) représente un résidu organique possédant une double liaison polymérisable, X représente un groupe hydrolysable, et n est un nombre entier de 1 à 3, avec 0,1 à 20% en poids d'anhydride maléique, et avec au moins un composé vinylique à une température de 50 ax 150°C en présence d'un initiateur de polymérisation radicalaire.

2. Procédé selon la revendication 1, dans lequel ledit groupe hydrolysable est un groupe méthoxy.

3. Peinture comprenant 100 parties en poids d'une résine vinylique contenant des groupes silyliques obtenue selon les revendications 1 ou 2, et 1 à 50 parties en poids d'un alcool alcoyle, dans laquelle lesdits deux composants sont mélangés à une température allant de la température ambiante à 100°C.